Europäisches Patentamt

(19) European Patent Office

Office européen des brevets

(11) Publication number: **0 045 875**
**A1**

(12) # EUROPEAN PATENT APPLICATION

(21) Application number: **81105711.6**

(22) Date of filing: **20.07.81**

(51) Int. Cl.³: **C 08 L 33/06**
**C 08 L 51/00**

(30) Priority: **11.08.80 US 176887**

(43) Date of publication of application:
**17.02.82 Bulletin 82 7**

(84) Designated Contracting States:
**BE DE FR GB IT NL SE**

(71) Applicant: **STAUFFER CHEMICAL COMPANY**

**Westport Connecticut 06880(US)**

(72) Inventor: **Silberberg, Joseph**
**1084 East 28th Street**
**Brooklyn NY 11210(US)**

(74) Representative: **Jaeger, Klaus, Dr.rer.nat.**
**Dipl.-Chem. et al,**
**Jaeger, Grams & Pontani Patentanwälte Bergstrasse 48 1/2**
**D-8035 München-Gauting(DE)**

(54) Blends of an acrylic polymer and impact resistant interpolymer.

(57) Blends of an acrylic polymer, such as polymethyl methacrylate, and an impact resistant interpolymer comprising crosslinked acrylic or methacrylic rubber, crosslinked styrene-acrylonitrile, and uncrosslinked styrene-acrylonitrile polymer components are disclosed. The blends have improved impact resistance as compared to the impact resistance of the acrylic polymer and have better strength, hardness, and stiffness than the interpolymer component.

EP 0 045 875 A1

# BLENDS OF AN ACRYLIC POLYMER
## AND IMPACT RESISTANT INTERPOLYMER

## Background of the Invention

### Field of the Invention

The present invention relates to blends of an acrylic polymer, such as polymethyl methacrylate resin, and an impact resistant interpolymer. The resulting blends can be used to form weatherable, impact resistant articles.

### Description of the Prior Art

Acrylic polymers, such as polymethyl methacrylate resins, have good optical quality, excellent weatherability and good tensile and flexural strength. They find use in a wide variety of applications including building panels and trim, external vehicle components, outdoor furniture, swimming pool parts, and so forth. The impact resistance of unmodified acrylic resins is, however, very low and precludes the use of those resins in certain applications where a higher degree of impact resistance is also desired.

Recently, it has been proposed in U.S. Patent No. 3,655,826 to R. P. Fellmann et al. to blend various thermoplastic polymers (including acrylic resins, see Col. 8, lines 11-13) and a three-stage acrylic elastomer impact resistant interpolymer. This prior art reference indicates that the selection of the third phase of the interpolymer is crucial, and it suggests that when impact modification is desired, the third stage should be a methacrylate or acrylate (see Col. 5, lines 65-70).

C-6035

## Summary of the Present Invention

The present invention relates to a weatherable, impact resistant blend of:  (1) an acrylic polymer, such as, polymethyl methacrylate resin; and (2) an impact resistant interpolymer comprising crosslinked (meth)acrylate, crosslinked styrene-acrylonitrile, and uncrosslinked styrene-acrylonitrile polymer components.  This type of interpolymer is more fully described in U.S. Patent No. 3,944,631 to A. J. Yu et al.  It has been described in the prior art as being a suitable additive for polycarbonate resins (U.S. Patent No. 4,148,842 to A. J. Yu et al.), for blends of chlorinated vinyl chloride polymer and vinyl chloride polymer (U.S. Patent No. 4,160,793 to P. Kraft et al.), and for vinyl chloride polymers (U.S. Patent No. 4,168,285).

## Description of Preferred Embodiments

The blends of the present invention comprise: (1) an acrylic resin; and (2) an impact resistant interpolymer comprising crosslinked (meth)acrylate, crosslinked styrene-acrylonitrile, and uncrosslinked styrene-acrylonitrile polymeric components.

The term "acrylic resin", as used herein, is intended to encompass those acrylic resins which are made by the polymerization of acrylic ester monomers. Details regarding the structure of these polymeric materials as well as the processes for forming them are available from a number of sources including Modern Plastics Encyclopedia (1977-1978 Edition) pp. 9-10; Handbook of Plastics and Elastomers, C. A.

C-6035

Harper, ed., McGraw-Hill, Inc. 1975, pp. 1-71 to 1-75; and Polymers and Resins by B. Golding, Van Nostrand Co., 1959, pp. 448-462. Representative polymers which are included in this class of acrylic resins or plastics include: polymethyl methacrylate, polyethyl acrylate and polybutyl acrylate. Copolymers of these acrylic esters with minor amounts of one or more copolymerizable monomers are also intended to be encompassed, e.g., the copolymer of methyl methacrylate with styrene and acrylonitrile. Commercially available acrylic resins include those sold under the following trademarks: LUCITE (E.I. duPont de Nemours and Co.); and PLEXIGLAS (Rohm and Haas Co.).

The terminology "impact resistant interpolymer comprising crosslinked (meth)acrylate, crosslinked styrene-acrylonitrile, and uncrosslinked styrene-acrylonitrile components" is meant to encompass the type of interpolymer compositions described in U.S. Patent No. 3,944,631 to A. J. Yu et al. These interpolymer compositions are formed by the following type of three-step, sequential polymerization process:

1. emulsion polymerizing a monomer charge (herein designated "(meth)acrylate", for the purposes of the present invention), of at least one $C_2$-$C_{10}$ alkyl acrylate, $C_8$-$C_{22}$ alkyl methacrylate or compatible mixtures thereof, in an aqueous polymerization medium in the presence of an effective amount of a suitable di- or polyethylenically unsaturated crosslinking agent for such a type of monomer, with the $C_4$-$C_8$ alkyl acrylates being the preferred (meth)acrylate monomers for use in this step;

C-6035

2. emulsion polymerizing a monomer charge of styrene and acrylonitrile in an aqueous polymerization medium, also in the presence of an effective amount of a suitable di- or polyethylenically unsaturated crosslinking agent for such monomers, said polymerization being carried out in the presence of the product from Step 1 so that the crosslinked (meth)acrylate and crosslinked styrene-acrylonitrile components form an interpolymer wherein the respective phases surround and penetrate one another; and

3. either emulsion or suspension polymerizing a monomer charge of styrene and acrylonitrile, in the absence of a crosslinking agent, in the presence of the product resulting from Step 2. If desired, Steps 1 and 2 can be reversed in the above-described procedure.

This product, which is used as the impact resistant interpolymer component in the blends of the present invention generally comprises from about 5% to about 50%, by weight, of the above-identified crosslinked (meth)acrylate component, from about 5% to about 35%, by weight, of the crosslinked styrene-acrylonitrile component and from about 15% to about 90%, by weight, of the uncrosslinked styrene-acrylonitrile component. It contains little graft polymerization between the styrene-acrylonitrile copolymer components and the crosslinked (meth)acrylate polymeric component. Further details regarding this type of polymer composition can be found in U.S. Patent No. 3,944,631 to A. J. Yu et al., which is incorporated herein by reference.

The blends of the present invention can be formulated in weight ratios of acrylic resin to interpolymer additive of from about 75:25 to about 5:95, depending upon the precise physical properties desired in the end product. A preferred range is from 60:40 to 20:80. Blending can be achieved by any of the well-known polymer blending techniques, such as a two-roll or Branbury mixing, single or multiple screw extrusion, or any other method which applies sufficient heat (e.g., 175° to 300°C., preferably 200° to 250°C.) and shear to the respective polymeric ingredients (acrylic resin and interpolymer additive) to obtain a satisfactory blend in accordance with the present invention.

The blends of the present invention can also contain any conventional functional additives normally used with acrylic polymer compositions, including fillers, colorants, lubricants, flame retardants, and the like.

The present invention is further illustrated by the Examples which follow.

C-6035

## EXAMPLE 1

This Example illustrates the impact resistance, hardness, tensile and flexural properties for a number of blends of a commercially available polymethyl methacrylate (PMMA), LUCITE 147K brand from E.I. duPont de Nemours and Co., and the impact resistant interpolymer described heretofore (abbreviated "Interpolymer"). The interpolymer comprised 32%, by weight, crosslinked polybutyl acrylate, 10%, by weight, crosslinked styrene-acrylonitrile, and 58%, by weight, uncrosslinked styrene-acrylonitrile.

Sample Nos. 2-5 listed below were extrusion compounded at temperatures of 221°-232°C. at 90 rpm in a conventional extrusion apparatus using a 2:1 compression ratio single stage screw. Sample Nos. 1 and 6 were the control samples.

| Sample | Composition (% by weight) |
|--------|---------------------------|
| 1 | 100% Interpolymer |
| 2 | 20% PMMA/80% Interpolymer |
| 3 | 40% PMMA/60% Interpolymer |
| 4 | 50% PMMA/50% Interpolymer |
| 5 | 60% PMMA/40% Interpolymer |
| 6 | 100% PMMA |

Sample Nos. 1-6 were then dried overnight at 90°C. and were injection molded (on a 28 gm. capacity injection machine available from Boy Company) at 190°-200°C. with the mold temperature set at 54°C. The screw speed was set on "slow", the back pressure was moderate, and the injection pressure setting was "34". The cycle had an injection hold time of 10 sec. and a screw return time of 20 sec.

C-6035

The produced test plaques were tested and the following physical properties were noted:

| | | IMPACT RESISTANCE | |
|---|---|---|---|
| Sample | % PMMA | Falling Dart (1) (J/m) | Izod Impact (2) (J/m) |
| 1 | 0 | > 6410 | 641 |
| 2 | 20 | > 6410 | 395 |
| 3 | 40 | 5230 | 176 |
| 4 | 50 | 2030 | 85 |
| 5 | 60 | 1180 | 64 |
| 6 | 100 | < 800 | 21 |

(1) Test performed by dropping 1.8 kg. dart with 1.60 cm. diameter tip from variable heights upon 0.32 cm. thick injection molded plaque over a 2.22 cm. diameter support. Mean failure energy was then calculated.

(2) ASTM D-256, Method A, using 0.32 cm. thick specimen.

| | | IMPACT RESISTANCE | |
|---|---|---|---|
| Sample | % PMMA | Rev. Notch Izod Impact (3) (J/m) | Tensile Impact (4) (KJ/m$^2$) |
| 1 | 0 | 2355 | 435 |
| 2 | 20 | 1484 | 174 |
| 3 | 40 | 769 | 202 |
| 4 | 50 | 475 | 80 |
| 5 | 60 | 406 | 61 |
| 6 | 100 | 176 | 27 |

(3) ASTM D-256, Method E using 0.32 cm. thick specimens.

(4) ASTM D-1822, specimen Type L.

These data illustrate that for Sample Nos. 2-5, an increase in the amount of interpolymer (and a corresponding decrease in the amount of polymethyl methacrylate) yields a composite blend having improved impact resistance.

| | | BARCOL HARDNESS (5) | |
|---|---|---|---|
| Sample | % PMMA | Instantaneous | After 10 sec. |
| 1 | 0 | 48 | 28 |
| 2 | 20 | 60 | 43 |
| 3 | 40 | 66 | 55 |
| 4 | 50 | 75 | 66 |
| 5 | 60 | 80 | 70 |
| 6 | 100 | 92 | 87 |

(5)   tested on a Barcol Impressor Hardness tester (Model No. GYZJ 935) as per the procedure suggested in the instruction manual published by Barber-Coleman Co., Rockford, Ill.

These data illustrate that the presence of polymethyl methacrylate contributes to the hardness of the blend.

0045875

| | | TENSILE PROPERTIES | |
|---|---|---|---|
| Sample | %PMMA | Tens. Str. at Yield (6) (MPa) | 'Ultimate Elong. (%) (6) |
| 1 | 0 | 32.4 | 120 |
| 2 | 20 | 42.7 | 120 |
| 3 | 40 | 49.6 | 130 |
| 4 | 50 | 55.1 | 120 |
| 5 | 60 | 59.9 | 98 |
| 6 | 100 | N.A. | N.A. |

(6) ASTM D-638, Type I specimen.

The presence of polymethyl methacrylate contributes to the strength of the blend. The readings for Example No. 6 were not considered reliable due to rupture at the clamping area arising from brittleness of the specimens.

| | | FLEXURAL PROPERTIES | |
|---|---|---|---|
| Sample | %PMMA | Flex. Str. (7) (MPa) | Flex. Mod. (7) (GPa) |
| 1 | 0 | 52.7 | 1.69 |
| 2 | 20 | 69.6 | 2.07 |
| 3 | 40 | 81.3 | 2.56 |
| 4 | 50 | 90.9 | 2.54 |
| 5 | 60 | 99.9 | 2.72 |
| 6 | 100 | 131.6 | 3.36 |

(7) ASTM D-790, Method I, Procedure B.

Greater flexural strength and modulus (stiffness) are exhibited when the percentage of polymethyl methacrylate is increased in the blends.

EXAMPLE 2

This Example illustrates the effect of blending conditions such as stock temperature and mixing shear on the impact resistance, as measured by the Izod impact test, of a blend of 70%, by weight, impact resistant interpolymer and 30%, by weight, polymethyl methacrylate (LUCITE 40 brand from DuPont). The respective blends in 250 gm. portions were melt fluxed in a small batch mixer (the PREP MIXER[TM] from Brabender Co.) under the conditions described below. The mixing time was varied inversely with the rpm values to keep the number of total revolutions constant.

| Sample | RPM | Total Mixing Time (Min.) | Equilibrium Stock Temp. (°C.) |
| --- | --- | --- | --- |
| 1 | 50 | 7 | 205 |
| 2 | 50 | 7 | 232 |
| 3 | 50 | 7 | 258 |
| 4 | 25 | 14 | 235 |
| 5 | 75 | 4.6 | 250 |

| Sample | Equilibrium Torque (m-gm.) | Izod Impact (J/m) |
| --- | --- | --- |
| 1 | 13,200 | 112 |
| 2 | 7,000 | 80 |
| 3 | 3,600 | 75 |
| 4 | 4,600 | 85 |
| 5 | 6,700 | 96 |

These data indicate that in a high shear batch mixing process of the type used in the above test, overly severe temperature conditions during mixing tend to be detrimental to the Izod impact strength of the blend. Varying the shear rate does not show this effect, however, when the total number of revolutions is held constant.

C-6035

- 12 -

EXAMPLE 3

This Example tests the ultraviolet induced discoloration of the blends of the present invention including those pigmented with titanium dioxide.

The samples were prepared by compounding the materials at 200°C. and 50 rpm for 10 minutes in a small batch mixer apparatus and then pressed to form homogeneous test plaques which also comprised rutile $TiO_2$ pigment at six parts by weight per one hundred parts by weight of sample. The samples were placed in a high intensity (30 watt) germicidal lamp apparatus at a distance of 3.2 cm. from the lamp for various lengths of time, as reported below, at the end of which time the change in color against an unexposed control specimen from the same sample was measured on a Hunter Color Meter. Lower values indicate a less discolored specimen.

| | Color Change With Respect to Unexposed Specimen (1) | | |
|---|---|---|---|
| Sample | 1 day | 4 days | 5 days |
| 100% Inter-polymer | 13.7 | 17.4 | 19.2 |
| 20% PMMA/80% Interpolymer*** | 12.2 | -- | 18.1 |
| 50% PMMA/50% Interpolymer* | 9.9 | 13.2 | -- |
| 50% PMMA/50% Interpolymer** | 10.0 | 12.9 | -- |
| 50% PMMA/50% Interpolymer*** | 9.6 | 13.3 | -- |

\*$TiO_2$ was added to interpolymer phase before it was mixed with PMMA.
\*\*$TiO_2$ was added to the PMMA phase before mixing with the interpolymer.
\*\*\*$TiO_2$ was added after the interpolymer and PMMA were mixed.

C-6035

(1) measured on a HUNTERLAB color difference meter
    (Model No. D 25D2) in accordance with ASTM D-1925,
    except that these values express color change ($\Delta E$)
    rather than the yellowness index units suggested
    in the above ASTM method.

These data indicate that polymethyl methacrylate improves the ultraviolet light resistance of the blend to discoloration and that the phase to which the $TiO_2$ pigment is added does not significantly affect the ultraviolet resistance of the blend.

C-6035

EXAMPLE 4

This Example illustrates the effect of processing conditions on the impact resistance properties of a blend of 70%, by weight, impact resistant interpolymer and 30%, by weight, polymethyl methacrylate (LUCITE 147K brand from DuPont).

The blends were prepared by extrusion at various barrel temperatures in the range of 177°-265°C. and various screw speeds (40-120 rpm). A single stage 2:1 compression screw having a diameter of 1 inch was used. The extruded specimens were then injection molded at 200°-220°C. into a 54°C. mold. The injection machine described in Example 1 was used. No back pressure was applied to the melt, and the cycle time totaled 30 seconds.

| Sample | Screw Speed (RPM) | Barrel Temp. (°C.) |
|--------|-------------------|---------------------|
| 1 | 80 | 177 |
| 2 | 80 | 199 |
| 3 | 40 | 221 |
| 4 | 60 | 221 |
| 5 | 80 | 221 |
| 6 | 100 | 221 |
| 7 | 120 | 221 |
| 8 | 80 | 243 |
| 9 | 80 | 265 |

| Sample | Falling Dart* (J/m) | Izod Impact* (J/m) |
|--------|---------------------|--------------------|
| 1 | 2510 | 123 |
| 2 | 3200 | 128 |
| 3 | 2830 | 123 |
| 4 | 3680 | 139 |
| 5 | 4320 | 166 |
| 6 | 4380 | 155 |
| 7 | 4010 | 187 |
| 8 | 3790 | 187 |
| 9 | 3260 | 187 |

| Sample | Reverse Izod Impact* (J/m) | Tensile Imp.* $(KJ/m^2)$ |
|--------|----------------------------|--------------------------|
| 1 | 481 | 114 |
| 2 | 908 | 105 |
| 3 | 491 | 124 |
| 4 | 561 | 122 |
| 5 | 587 | 120 |
| 6 | 539 | 111 |
| 7 | 705 | 130 |
| 8 | 833 | 132 |
| 9 | 732 | 120 |

* The same test procedures reported for the corresponding tests in Example 1 were employed.

These data illustrate that for the tested blends under extrusion conditions the general trend is for impact strength to be optimum at moderate to high temperatures and screw speeds and that insufficient levels of temperature and shear do not allow the blend to develop its full impact strength potential.

C-6035

EXAMPLE 5

This Example illustrates the gloss and color characteristics of a blend of 50%, by weight, of the impact resistant interpolymer and 50%, by weight, of polymethyl methacrylate (LUCITE 147 brand from DuPont) which had been additionally pigmented with six parts by weight of $TiO_2$ to one hundred parts by weight of the interpolymer and polymethyl methacrylate.

The test specimens of the blend were formed by compression molding at 188°C. to 0.08 cm. thickness after the blend had been mixed at 220°C. and 30 rpm in a small batch mixer. The compression molded specimens were exposed in a xenon-arc WEATHER-OMETER brand accelerated aging apparatus at 50% relative humidity with 18 minutes of water spray every 2 hours. The Table sets forth the readings in the color change for the sample with the passage of time as compared to a commercially available impact grade acrylic of differing chemical composition.

Color Change
With Respect to Unexposed Specimen (1)

| Hours | Interpolymer/PMMA Blend | Commercial Acrylic |
|---|---|---|
| 46 | 0.8 | 0.7 |
| 209 | 1.2 | 0.7 |
| 378 | 1.0 | 1.0 |
| 515 | 1.1 | 1.0 |
| 682 | 1.1 | 1.2 |
| 851 | 1.4 | 1.3 |
| 1014 | 1.1 | 1.6 |
| 1301 | 1.3 | 1.9 |
| 2052 | 1.4 | 1.8 |

(1) measured on a HUNTERLAB color difference meter (Model No. D25D2) in accordance with ASTM D-1925, except that these values express color change ($\Delta E$) rather than the yellowness index units suggested in the above standard method.

These data indicate that the blend has color retention properties equivalent to the commercial acrylic material.

| Hours | 60° Gloss Lost (%) (2) | |
|---|---|---|
| | Interpolymer/PMMA Blend | Commercial Acrylic |
| 46 | 1 | 0 |
| 209 | 5 | 6 |
| 378 | 10 | 10 |
| 515 | 12 | 12 |
| 682 | 15 | 15 |
| 851 | 19 | 21 |
| 1014 | 26 | 38 |
| 1301 | 28 | 60 |
| 2052 | 39 | 76 |

(2) measured with a GARDNER Gloss Meter (GLOSSGARD SYSTEM 60) in accordance with ASTM D-523.

C-6035

These data illustrate that the loss of gloss is greater for the commercial acrylic after more than about one thousand hours of exposure under the described test conditions.

The foregoing Examples set forth certain embodiments of the present invention but should not be construed in a limiting manner. The scope of protection for the present invention is set forth in the claims which follow.

C-6035

What is Claimed:

1. A weatherable, impact resistant blend comprising: (1) an acrylic resin; and (2) an impact resistant interpolymer comprising crosslinked (meth)acrylate, crosslinked styrene-acrylonitrile, and uncrosslinked styrene-acrylonitrile polymeric components.

2. A blend as claimed in Claim 1 wherein the interpolymer comprises from about 5% to about 50%, by weight, of the (meth)acrylate component, from about 5% to about 35%, by weight, of the crosslinked styrene-acrylonitrile component, and from about 15% to about 90%, by weight, of the uncrosslinked styrene-acrylonitrile component.

3. A blend as claimed in Claim 1 or 2 which comprises a weight ratio of acrylic resin to interpolymer of from about 75:25 to about 5:95.

4. A blend as claimed in either Claim 1 or 2 wherein the weight ratio of acrylic resin to interpolymer is from about 60:40 to about 20:80.

5. A blend as claimed in either Claim 1 or 2 wherein the (meth)acrylate component is selected from the group consisting of the crosslinked $C_2-C_{10}$ alkyl acrylates, the crosslinked $C_8-C_{22}$ alkyl methacrylates, and compatible mixtrues thereof.

6. A blend as claimed in either Claim 1 or 2 wherein the (meth)acrylate component is a crosslinked $C_4-C_8$ alkyl acrylate.

7. A blend as claimed in either Claim 1 or 2 wherein the acrylic resin is polymethyl methacrylate.

8. A blend as claimed in either Claim 1 or 2 wherein the acrylic resin is polymethyl methacrylate and the (meth)acrylate component is crosslinked butyl acrylate.

C-6035

9. A blend as claimed in either Claim 1 or 2 wherein the weight ratio of acrylic resin to interpolymer is from about 60:40 to about 20:80 and the interpolymer comprises from about 5% to about 50%, by weight, of a crosslinked polybutyl acrylate component, from about 5% to about 35%, by weight, of the crosslinked styrene-acrylonitrile component, and from about 15% to about 90%, by weight, of the uncrosslinked styrene-acrylonitrile component.

0045875

européan Patent Office

**EUROPEAN SEARCH REPORT**

Application number

EP 81 10 5711

| | DOCUMENTS CONSIDERED **TO BE RELEVANT** | | CLASSIFICATION OF THE APPLICATION (Int Cl ³) |
|---|---|---|---|
| Category | Citation of document with indication, where appropriate. of relevant passages | Relevant to claim | |
| X | FR - A - 2 107 349 (BASF)<br>* Claims * | 1-9 | C 08 L 33/06<br>51/00 |
| | -- | | |
| | DE - A - 2 311 129 (BASF)<br>* Claims * | 1-9 | |
| | -- | | |
| | GB - A - 1 254 226 (MITSUBISHI)<br>* Claims * | 1-9 | |
| | ---- | | |

TECHNICAL FIELDS SEARCHED (Int Cl ³)

C 08 L 51/00
33/06
33/08
33/10
33/12

CATEGORY OF CITED DOCUMENTS

X: particularly relevant
A: technological background
O: non-written disclosure
P: intermediate document
T: theory or principle underlying the invention
E: conflicting application
D: document cited in the application
L: citation for other reasons

&: member of the same patent family. corresponding document

The present search report has been drawn up for all claims

| Place of search | Date of completion of the search | Examiner |
|---|---|---|
| The Hague | 12-11-1981 | FOUQUIER |

EPO Form 1503.1   06.78